# EUROPÄISCHE PATENTSCHRIFT

(11) **EP 3 514 442 B1**
(45) Veröffentlichungstag und Bekanntmachung des Hinweises auf die Patenterteilung: **22.07.2020**
(21) Anmeldenummer: 18206455.0
(22) Anmeldetag: 15.11.2018
(51) Int. Cl.: F21S 8/04, F21V 17/16, F21V 17/18, F21V 21/02, F21V 23/02, F21V 3/02, F21Y 103/10, F21Y 115/10, F21V 8/00

(54) **FLÄCHENLEUCHTE MIT OPTIMIERTER BAUHÖHE**
FLAT LIGHT WITH OPTIMIZED HEADROOM
LAMPE À LUMIÈRE DIFFUSE À ENCOMBREMENT EN HAUTEUR OPTIMISÉ

(30) Priorität: 23.01.2018 DE 202018100352 U
(43) Veröffentlichungstag der Anmeldung: 24.07.2019
(73) Patentinhaber: Zumtobel Lighting GmbH, 6850 Dornbirn (AT)
(72) Erfinder: Machate, Andreas, 88239 Wangen im Allgäu (DE)
(74) Vertreter: Thun, Clemens

(56) Entgegenhaltungen:
- EP-A1- 2 990 719
- CH-A2- 712 491
- DE-U1-202013 101 819
- US-A1- 2013 051 033
- US-B1- 9 069 106

## Beschreibung

Die vorliegende Erfindung betrifft eine sogenannte Flächenleuchte, bei der verschiedene Maßnahmen vorgesehen sind, mit deren Hilfe die Bauhöhe der Leuchte reduziert werden kann. Ferner betrifft die Erfindung eine Flächenleuchte, deren Zusammenbau vereinfacht ist.

Unter Flächenleuchten werden Leuchten verstanden, welche derart ausgestaltet sind, dass Licht über eine größere, meist rechteckige Fläche im Wesentlichen gleichmäßig abgegeben wird. Unter einer gleichmäßigen beziehungsweise homogenen Lichtabgabe wird hierbei verstanden, dass die Farbe beziehungsweise die Farbtemperatur des abgegebenen Lichts im Wesentlichen über die gesamte Fläche, über die Licht abgegeben wird, gleich ist und die leuchtende Fläche auch insgesamt gleichmäßig hell erscheint. Insbesondere sollen keine individuellen Lichtquellen oder starke Helligkeitsunterschiede erkennbar sein.

Leuchten der oben beschriebenen Art können sowohl als Anbauleuchten als auch als abgehängte Leuchten realisiert werden. Da diese Leuchten in der Regel größere Abmessungen aufweisen, da mit ihrer Hilfe großflächig leuchtende Bereiche realisiert werden sollen, ist üblicherweise gewünscht, dass die Höhe der Leuchte vergleichsweise gering ist. Dies gilt sowohl im Falle einer abgehängten Leuchte als auch für den Anbau beispielsweise an einer Decke eines zu beleuchtenden Raumes.

In der Vergangenheit wurde beim Realisieren derartiger Flächenleuchten das Hauptaugenmerk auf die Gestaltung der für die Lichtabgabe verantwortlichen Komponenten gelegt. Hierbei hat sich insbesondere der Einsatz von plattenförmigen Lichtleitern als vorteilhaft herausgestellt, da bei dieser Technik die Höhe der für die Lichtabgabe verantwortlichen Komponenten stark reduziert werden kann. Diese Lichtleitertechnik beruht darauf, dass für die Lichtabgabe ein flächiges Element beziehungsweise ein Schichtaufbau mehrerer flächiger Elemente vorgesehen ist, wobei über eine Flachseite der Anordnung das Licht abgegeben wird. Die Lichteinkopplung hingegen erfolgt an der Längs- bzw. Schmalseite, wobei hierfür üblicherweise LEDs oder LED-Platinen genutzt werden, die entlang einer oder mehrerer Seitenflächen der Lichtleiter-Anordnung positioniert werden. Das von den LEDs abgegebene und in die Lichtleiter-Anordnung eingekoppelte Licht wird dann mit Hilfe von Reflexionen verteilt und anschließend in geeigneter Weise ausgekoppelt, sodass über die gesamte Fläche hinweg eine homogene, gleichmäßige Lichtabgabe erzielt werden kann. Diese Art der Lichtverteilung und Lichtabgabe bringt darüber hinaus auch den Vorteil mit sich, dass etwaige kleine Unterschiede in der Farbe beziehungsweise der Farbtemperatur des von den einzelnen LEDs abgegebenen Lichts ausgeglichen werden, da das Licht, bevor es den Lichtleiter verlässt, zunächst entsprechend gemischt wird. Da ferner die Lichtquellen nicht an der Rückseite der Lichtleiter-Anordnung, sondern seitlich hiervon positioniert werden, kann für die Komponenten, welche für die Lichterzeugung und Lichtabgabe verantwortlich sind, eine sehr geringe Höhe erzielt werden. Eine Leuchte mit einem derartigen Lichtleiter ist beispielsweise aus der US 9,069,106 B1 bekannt.

Ausgehend von dem zuvor beschriebenen Stand der Technik liegt der vorliegenden Erfindung die Aufgabenstellung zu Grunde, Flächenleuchten der beschriebenen Art zusätzlich hinsichtlich ihrer Bauhöhe zu optimieren. Weiterhin liegt der Erfindung die Aufgabenstellung zugrunde, eine Flächenleuchte anzugeben, deren Zusammenbau vereinfacht ist.

Die Aufgabe wird durch eine Leuchte mit den Merkmalen des Anspruchs 1 gelöst. Vorteilhafte Weiterbildungen der Erfindung sind Gegenstand der abhängigen Ansprüche.

Auch bei der erfindungsgemäße Leuchte kommt die oben beschriebene Lichtleiter-Technologie zum Einsatz, bei der also die Lichtquellen seitlich zu einem flächigen Lichtleiter beziehungsweise einer Lichtleiter-Anordnung positioniert werden, derart, dass das Licht über eine Schmalseite in den Lichtleiter eingekoppelt und über eine senkrecht hierzu ausgerichtete Lichtaustrittsfläche abgegeben wird. Die erfindungsgemäßen Maßnahmen betreffen nunmehr weitere Bestandteile der Leuchte, deren Einfluss auf die sich insgesamt ergebende Bauhöhe bislang eher vernachlässigt wurde. Es hat sich gezeigt, dass hier Verbesserungen zu einer zusätzlichen Reduzierung der Bauhöhe der Leuchte insgesamt führen können.

Die Erfindung betrifft dabei Maßnahmen, welche die Montage der Leuchte betreffen, insbesondere für den Fall, dass die Leuchte als sogenannte Anbauleuchte ausgeführt ist. In diesem Fall soll also ein rückseitiger Bereich der Leuchte möglichst anliegend an einer Trägerfläche, beispielsweise an der Decke eines zu beleuchtenden Raums befestigt sein, wobei die Befestigungsmaßnahmen derart ausgeführt sein sollten, dass sie ein leichtes Befestigen der Leuchte sowie ein späteres Lösen der Befestigung, beispielsweise zu Wartungszwecken, ermöglichen. Darüber hinaus sollten die Befestigungsmaßnehmen idealerweise für Beobachter nicht erkennbar sein.

In diesem Zusammenhang ist bekannt, zunächst an der Decke eines Raumes einen Montagerahmen zu fixieren, beispielsweise mit der Decke zu verschrauben, an dem dann lösbar die eigentliche Leuchte befestigt wird. Dies erfolgt beispielsweise über spezielle Rastsysteme, die dann über einen speziellen Mechanismus wieder gelöst werden können. Die hierzu bislang bekannten Systeme erfordern allerdings einen verhältnismäßig großen Abstand der Leuchte von der Decke, da sie andernfalls schlecht zugänglich sind und dann nur schwer betätigt werden können. Beispielsweise ist aus der EP 2 990 719 A1 ein entsprechendes Montagesystem bekannt, wobei hier die Verrastung zwischen Leuchtengehäuse und Montagerahmen mit Hilfe verschenkbar gelagerter Verriegelungselemente erfolgt. Weitere Montagelösungen sind in der CH 712 491 A2, der US 2013/0051033 A1 sowie der DE 20 2013 101 819 U1 beschrieben.

Zur Lösung dieses Problems wird nunmehr erfindungsgemäß vorgeschlagen, die lösbare Verbindung zwischen dem Montagerahmen und einem Geräteträger der Leuchte mit zwei Riegeln zu gestalten, die an dem Montagerahmen verschiebbar angeordnet und zum Verrasten mit zumindest jeweils einem an dem Geräteträger angeordneten Rastelement ausgebildet sind, wobei die Riegel zum Lösen der Verrastung in einer Richtung parallel zur Ebene des Lichtleiterelements bewegbar sind. Der Montagerahmen weist hierbei einen rahmenartigen Bereich auf, an dessen Seiten sich Stege nach unten erstrecken, wobei zwei dieser Stege einander gegenüber liegende Führungen für die Riegel bilden und die Riegel jeweils an der Innenseite der Stege anliegen.

Gemäß der vorliegenden Erfindung wird dementsprechend eine Flächenleuchte mit einem plattenförmigen Lichtleiterelement sowie an zumindest einer Schmalseite des Lichtleiterelements angeordneten Leuchtmitteln vorgeschlagen, deren Licht über eine durch die Schmalseite gebildete Lichteintrittsfläche in das Lichtleiterelement eingekoppelt und über eine im Wesentlichen senkrecht zur Lichteintrittsfläche ausgerichtete Lichtaustrittsfläche abgegeben wird,
wobei an der der Lichtaustrittsfläche gegenüberliegenden Seite des Lichtleiterelements ein flächiger Geräteträger vorgesehen ist, an dem zumindest ein Betriebsgerät für die Leuchtmittel angeordnet ist,
wobei die Leuchte ferner einen Montagerahmen aufweist, der lösbar mit dem Geräteträger verbindbar und zur Befestigung an einer Trägerfläche, beispielsweise an der Decke eines zu beleuchtenden Raumes, ausgebildet ist,
wobei die lösbare Verbindung zwischen Geräteträger und Montagerahmen zwei Riegel aufweist, die an dem Montagerahmen verschiebbar angeordnet und zum Verrasten mit zumindest jeweils einem an dem Geräteträger angeordneten Rastelement ausgebildet sind, wobei die Riegel zum Lösen der Verrastung in einer Richtung parallel zur Ebene des Lichtleiterelements bewegbar sind,
und wobei der Montagerahmen einen rahmenartigen Bereich aufweist, an dessen Seiten sich Stege nach unten erstrecken, wobei zwei dieser Stege einander gegenüber liegende Führungen für die Riegel bilden und die Riegel jeweils an der Innenseite der Stege anliegen.

Es hat sich gezeigt, dass durch die erfindungsgemäße Ausgestaltung und Lagerung der Riegel derart, dass diese parallel zur Ebene des Lichtleiterelements bewegt werden müssen, um die Verrastung zu lösen, die Handhabung der Leuchtenbefestigung insgesamt vereinfacht wird und gleichzeitig die für die Befestigung verantwortlichen Komponenten in einer äußerst geringen Bauhöhe realisiert werden können.

Die Riegel sind dabei insbesondere derart ausgestaltet, dass sie zu beiden Seiten über den Montagerahmen überstehen und damit von beiden Seiten her betätigt werden können. Unabhängig von der Positionierung der erfindungsgemäßen Leuchte an einer Decke ist also der Verriegelungsmechanismus immer erreichbar und betätigbar.

Vorzugsweise ist ferner vorgesehen, dass die Riegel in eine Schließposition vorgespannt sind, was insbesondere mit Hilfe geeigneter Federelemente erreicht wird. Ferner sind die Riegel vorzugsweise auch derart ausgestaltet, dass sie beim Ansetzen der Leuchte beziehungsweise des Geräteträgers an den Montagerahmen zur Montage der Leuchte selbständig in eine offene Stellung auswandern, sodass die Riegel selbst lediglich zum Lösen der Verrastung betätigt werden müssen, beim Montieren der Leuchte hingegen ein automatisches Verrasten erzielt wird.

Nachfolgend soll die Erfindung an Hand der beiliegenden Zeichnung näher erläutert werden. Es zeigen:
- Figur 1: die Rückseite einer erfindungsgemäß ausgestalteten Flächenleuchte, die im dargestellten Fall für einen Deckenanbau ausgeführt ist;
- Figur 2: eine vergrößerte Ansicht der Rückseite der Leuchte gemäß Figur 1, wobei insbesondere das erfindungsgemäße Montagesystem erkennbar ist;
- Figur 3: eine Ansicht der Leuchte, bei der der Geräteträger von dem Montagerahmen beabstandet ist;
- Figur 4: eine Ansicht des zur erfindungsgemäßen Befestigung vorgesehenen Rast-Riegels;
- Figur 5: eine vergrößerte Ansicht des Rast-Riegels;
- Figur 6: ein bei der Leuchte zum Einsatz kommendes Betriebsgerät, welches für eine höhenreduzierte Befestigung an dem Geräteträger ausgeführt ist;
- Figur 7: die Ausgestaltung des Geräteträgers zur höhenreduzierten Befestigung eines Betriebsgeräts;
- Figur 8: das an dem Geräteträger in einer Weise befestigte Betriebsgerät;
- Figur 9: eine zu den Figuren 7 und 8 alternative Befestigungsmöglichkeit für das Betriebsgerät an dem Geräteträger;
- Figuren 10 und 11: eine vorteilhafte Variante zur Befestigung eines Betriebsgeräts an dem Geräteträger;
- Figuren 12 und 13: Ansichten eines Akkumulators, der in einer Weise an einem Geräteträger befestigbar ist;
- Figuren 14 und 15: Ansichten einer alternativen Ausführungsform eines Akkumulators mit der Möglichkeit zur höhenreduzierten Befestigung an einem Geräteträger;
- Figuren 16 und 17: Ansichten einer Anschlussklemme, die in optimierter Weise an dem Geräteträger befestigt ist;
- Figur 18: eine erste Variante zur rahmenlosen Befestigung einer Leuchtenabdeckung an einem Leuchtenrahmen;
- Figuren 19 und 20: Ansichten der bei der Lösung gemäß Figur 18 zum Einsatz kommenden Befestigungsfeder;
- Figur 21: eine weitere Lösung zur rahmenlosen Befestigung einer Abdeckung an einem Rahmen;
- Figuren 22 bis 24: weitere Detailansichten der Lösung gemäß Figur 21;
- Figuren 25 bis 29: eine weitere Variante einer Leuchte, bei welcher der Rahmen in geschlossener Form in einem abschließenden Montageschritt am Außenumfang der Leuchte angebracht wird.

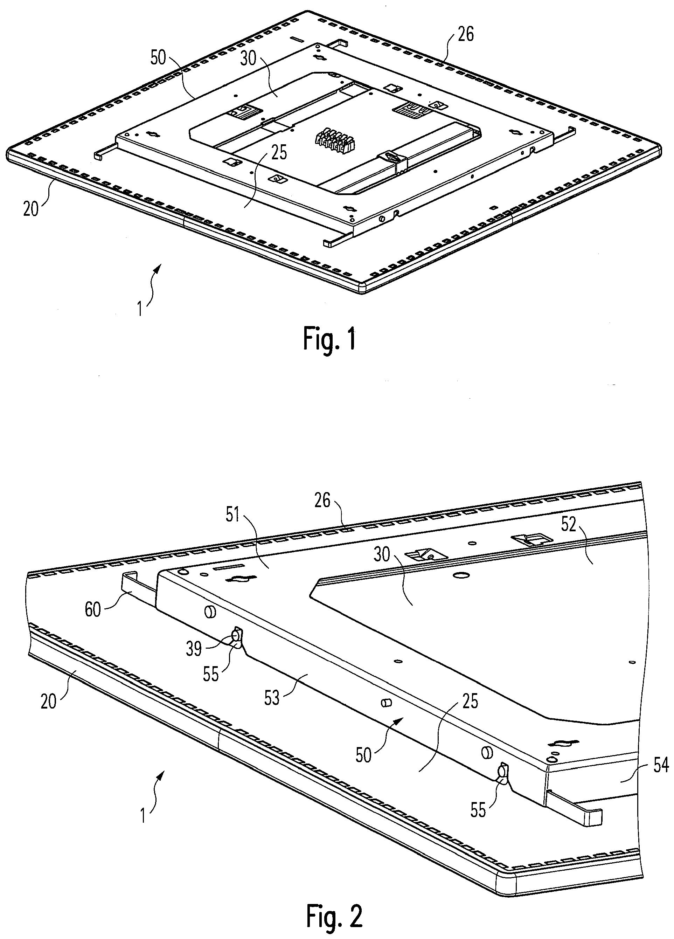

In Figur 1 ist zunächst eine allgemein mit dem Bezugszeichen 1 versehene erfindungsgemäße Flächenleuchte gezeigt, die im dargestellten Ausführungsbeispiel für einen Deckenanbau ausgebildet ist. Die zunächst beschriebenen erfindungsgemäßen Maßnahmen betreffen den rückseitigen Bereich, also den Bereich der Leuchte 1, der der eigentlichen Lichtabstrahlfläche gegenüber liegt. Die Leuchte 1 weist hierbei eine etwa quadratische Form auf, wobei die erfindungsgemäßen Lösungen allerdings nicht auf die dargestellte Form beschränkt sind. In gleicher Weise könnte die Leuchte 1 beispielsweise auch rechteckig oder auch oval beziehungsweise kreisförmig ausgeführt sein.

Der eigentliche Leuchtenkörper weist eine verhältnismäßig flache Höhe auf und wird von einem umlaufenden Rahmen 20 umgeben, der der Halterung der später noch näher beschriebenen Komponenten zur Lichterzeugung und Lichtabgabe dient. An der der Lichtabstrahlseite gegenüber liegenden Rückseite des Leuchtenkörpers ist eine quadratische Abdeckung 25 vorgesehen, die den von dem Rahmen 20 umschlossenen Bereich zur Rückseite hin abdeckt, allerdings am Umfangsbereich Öffnungen 26 aufweist, die einen Austritt eines geringfügigen Anteils des von den Leuchtmitteln erzeugten Lichts zur Rückseite hin ermöglichen. Hierdurch kann im Sinne einer Indirektbeleuchtung der oberhalb des Leuchtenkörpers liegende Bereich einer Decke aufgehellt werden.

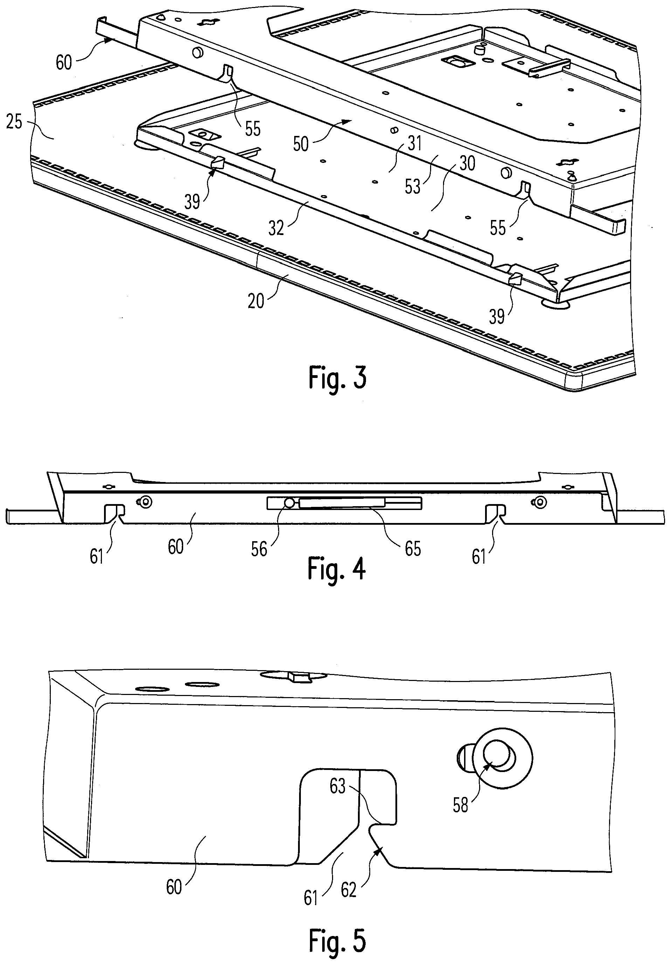

An der beispielsweise aus Blech gebildeten Abdeckung 25 ist ferner an der Rückseite des Leuchtenkörpers ein in Figur 3 näher erkennbarer Geräteträger 30 angeordnet, der der nachfolgend noch näher beschriebenen Halterung von Komponenten dient, die für die Erzeugung einer geeigneten Spannung zum Betreiben der Leuchtmittel verantwortlich sind. Daneben dient der Geräteträger 30 auch der Montage der Leuchte 1 an einer Decke, wobei der Geräteträger 30 hierzu nicht unmittelbar an der Decke befestigt wird, sondern mit einem hierfür vorgesehenen Montagerahmen 50 verbindbar ist. Der Montagerahmen 50 selbst wird dabei in einem ersten Schritt an einer Trägerfläche, also beispielsweise an der Decke eines zu beleuchtenden Raums fixiert, wobei dies vorzugsweise über eine Schraubverbindung erfolgt. In einem zweiten Schritt wird dann die eigentliche Leuchte über den Geräteträger 30 an dem Montagerahmen 50 befestigt. Die Befestigung erfolgt insbesondere werkzeuglos und ist - wie nachfolgend näher beschrieben - in spezieller Weise ausgestaltet, um eine geringe Bauhöhe der Befestigungsmaßnahmen sicherzustellen.

Dabei ist vorgesehen, dass der Montagerahmen 50 mit dem Geräteträger 30, der wie bereits erwähnt an der Rückseite der Abdeckung 25 fixiert ist, verrastbar ist. Hierzu sind zwei speziell ausgestaltete Rast-Riegel 60 vorgesehen, die verschiebbar an dem Montagerahmen 50 befestigt sind und mit dem Geräteträger 30 in der nachfolgend näher beschriebenen Weise verrasten.

Hierzu ist zunächst der Montagerahmen 50 derart ausgeführt, dass er einen flachen, rahmenartigen Bereich 51 aufweist, der eine etwa quadratische Öffnung 52 umschließt und im an der Decke fixierten Zustand an dieser anliegt. Die Öffnung 52 ist insofern sinnvoll, als hierdurch ein Anschließen von Stromversorgungskabeln an Anschlussklemmen, die an dem Geräteträger 30 befestigt sind, erfolgen kann.

Von dem rahmenartigen Bereich 51 erstrecken sich an den Seiten jeweils entsprechende Stege 53 und 54 nach unten, wobei zwei dieser Stege 53 einander gegenüber liegende Führungen für die Rast-Riegel 60 bilden. Die Riegel 60 liegen dabei jeweils an der Innenseite der Stege 53 an und sind jeweils mittels zweier Gleitlager 58 derart gelagert, dass sie entlang der Stege 53 verschoben werden können.

Eine Führung der Riegel 60 in den Endbereichen der Stege 53 wird auch dadurch erreicht, dass die beiden weiteren Stege 54 des Montageelements 50 in ihren Endbereichen entsprechende Schlitze aufweisen, durch die die Riegel 60 hindurch greifen.

Wie weiterhin in den Figuren 2 und 3 erkennbar ist, weisen die Stege 53 jeweils zwei Rastöffnungen 55 auf, die an ihrer Unterseite sich erweiternd ausgeführt sind und dementsprechend Anlaufschrägen aufweisen. Korrespondierend zu diesen Rastöffnungen 55 weisen auch die Riegel 60 Öffnungen 61 auf, die zunächst zur Unterseite hin sich erweiternd ausgeführt sind, allerdings einen Rastvorsprung 62 mit einer horizontalen Auflagefläche 63 aufweisen. Die Riegel 60, welche zu beiden Seiten des Montagerahmens 50 überstehen und an ihren Enden für eine bessere Betätigung abgewinkelt ausgeführt sind, sind dabei mit Hilfe einer Zugfeder 65 in die in den Figuren dargestellte Position vorgespannt. Die Zugfeder 65 greift hierbei einerseits an dem Riegel 60 selbst sowie andererseits an dem Steg 53 des Montagerahmens 50 beziehungsweise einem entsprechend nach innen ragenden Zapfen 56 an und zieht den Riegel 60 in der Darstellung der Figuren 4 und 5 nach links. Insbesondere wird der Riegel 60 durch die Zugfeder 65 so weit nach links vorgespannt, dass im Ausgangszustand der Rastvorsprung 62 mit dem entsprechenden Wandbereich 57 der Rastöffnung 55 des Stegs 53 überlappt. Gleichzeitig bilden beide Anlaufschrägen des Riegels 60 und der Rastöffnung 55 ein nach unten geöffnetes Dreieck, welches das Einführen eines Rastelements ermöglicht.

Bei diesem Rastelement handelt es sich um Raststifte 39, die an dem Geräteträger 30 befestigt sind. Wie in Figur 3 gezeigt, weist auch der Geräteträger 30 ausgehend von einem ebenen plattenförmigen Bereich 31 an seinem Umfang senkrecht hierzu ausgerichtete Stege 32 auf, wobei an zwei einander gegenüber liegenden Stegen 32 jeweils zwei Raststifte 39 befestigt sind. Dies kann dadurch erfolgen, dass die Raststifte 39 durch entsprechende Öffnungen in den Stegen 32 des Geräteträgers 30 hindurch geführt sind. Sie ragen über die Stege 32 überstehend nach außen in den Bereich der Stege 53 des Montagerahmens 50.

Wird nun die Leuchte 1 mit dem Geräteträger 30 von der Unterseite her an den Montagerahmen 50 angesetzt, so greifen die Endbereiche der Raststifte 39 bei korrekter Positionierung der Leuchte zunächst in die dreieckförmigen Einführungsbereiche ein, die durch die Anlaufschrägen der Rastöffnungen 55, 61 des Montagerahmens 50 beziehungsweise des Riegels 60 gebildet werden. Dies führt dazu, dass bei weiterem Andrücken der Leuchte an den Montagerahmen 50 die Riegel 60 entgegen der Federkraft seitlich auswandern, bis die Stifte 39 den Rastvorsprung 62 passieren. Zu diesem Zeitpunkt schnappt dann der Riegel auf Grund der Feder 65 wieder in die Ausgangslage zurück, wobei nunmehr die Auflagefläche 63 des Rastvorsprungs 62 den zugehörigen Raststift 39 untergreift. Die horizontale Auflagefläche 63 hat hierbei zur Folge, dass der Riegel 60 nicht mehr selbständig in die offene Position auswandern wird, sondern nur durch bewusstes Ziehen des Riegels 60 in die Offenstellung hin die Verrastung wieder gelöst werden kann.

Somit wird mit Hilfe der erfindungsgemäßen Lösung ein sehr einfaches aber effizientes Befestigen der Leuchte an dem Montagerahmen 50 erzielt. In jedem Fall ist eine sichere Halterung der Leuchte gewährleistet, da die Feder 65 nicht der Gewichtskraft der Leuchten entgegen wirken muss und dementsprechend die beiden Riegel 60 auch Leuchten mit einem höheren Gewicht problemlos halten können. Der Geräteträger 30 wird hierbei an vier verteilten Positionen zuverlässig gehalten, sodass die Leuchte insgesamt stabil an der Decke gehalten wird.

Gleichzeitig ist allerdings auch ein einfaches Lösen der Verrastung ermöglicht, da hierzu lediglich beide Riegel 60 in die Offenposition gezogen beziehungsweise geschoben werden müssen. Dadurch, dass beide Riegel 60 in ihren Endbereichen zu beiden Seiten des Montagerahmens 50 überstehen, ist hierbei gewährleistet, dass unabhängig von der Montagesituation der Leuchte 1 ein Lösen der Verrastung in einfacher Weise möglich ist. Alle diese Vorteile werden dabei insbesondere auch in Kombination mit dem Vorteil erzielt, dass die Maßnahmen zur Befestigung der Leuchte an dem Montagerahmen 50 eine äußerst geringe Höhe aufweisen.

Der Geräteträger 30 dient allerdings nicht nur der Befestigung der Leuchte an dem Montagerahmen 50, sondern insbesondere auch der Halterung elektrischer Komponenten zur Stromversorgung der Leuchtmittel. Hierbei kann es sich insbesondere um Betriebsgeräte oder Anschlussklemmen handeln. Soll die Leuchte ferne auch eine sog. Notlichtfunktion aufweisen, so ist oftmals zusätzlich auch ein Akkumulator an dem Geräteträger befestigt. Nachfolgend sollen nunmehr Maßnahmen beschrieben werden, mit deren Hilfe die sich hierbei ergebende Bauhöhe reduziert werden kann.

Üblicherweise war bislang nämlich vorgesehen, die an dem Geräteträger 30 zu befestigenden Komponenten an einer Flachseite des Geräteträgers 30 aufliegend anzuordnen und dann mit dem Geräteträger 30 zu verschrauben oder zu verrasten. Die hierbei genutzten Befestigungselemente, beispielsweise Schrauben oder Raststifte, durchgriffen dann den Geräteträger 30 und standen an der den zu befestigenden Komponenten gegenüberliegenden Seite über. Dies wiederum bedeutet, dass bei der in den Figuren dargestellten Leuchte der Geräteträger 30 einen gewissen Abstand von der Abdeckung 25 aufweisen müsste, da andernfalls die überstehenden Rastelemente mit der Abdeckung 25 kollidieren würden. Insgesamt ergibt sich in diesem Fall eine Gesamthöhe gebildet aus der Dicke des Geräteträgers, der Höhe der zu befestigenden Komponente(n) und des Überstands der den Geräteträger 30 durchdringenden Befestigungselemente.

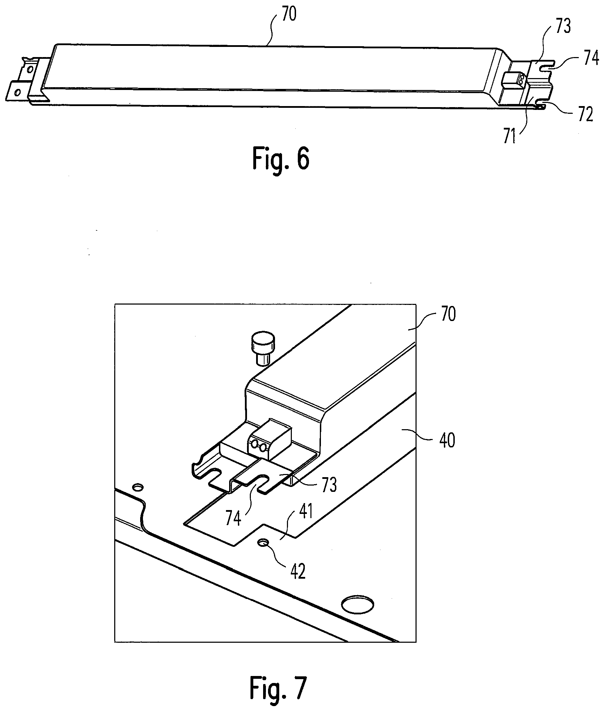

Die Figuren 6 bis 8 zeigen nunmehr eine erste Variante, mit der die resultierende Höhe insgesamt reduziert werden kann. Gezeigt ist hierbei zunächst in Figur 6 ein Betriebsgerät 70, welches an dem Geräteträger 30 befestigt werden soll. Wie üblich weist hierzu das Betriebsgerät 70 an seinen einander gegenüber liegenden Endbereichen Vorsprünge 71, 73 mit Ausnehmungen 72, 74 auf, welche das Verschrauben mit dem Geräteträger 30 ermöglichen. Eine Besonderheit besteht allerdings darin, dass die beiden Endbereiche abgestuft ausgeführt sind, so dass zu beiden Seiten jeweils lediglich eine Ausnehmung 72 - wie bislang üblich - auf Höhe der Bodenfläche des Betriebsgeräts 70 liegt, die zweite Ausnehmung 74 hingegen ist auf einem im Vergleich zur Bodenfläche erhöht ausgebildeten Vorsprung 73 ausgeführt.

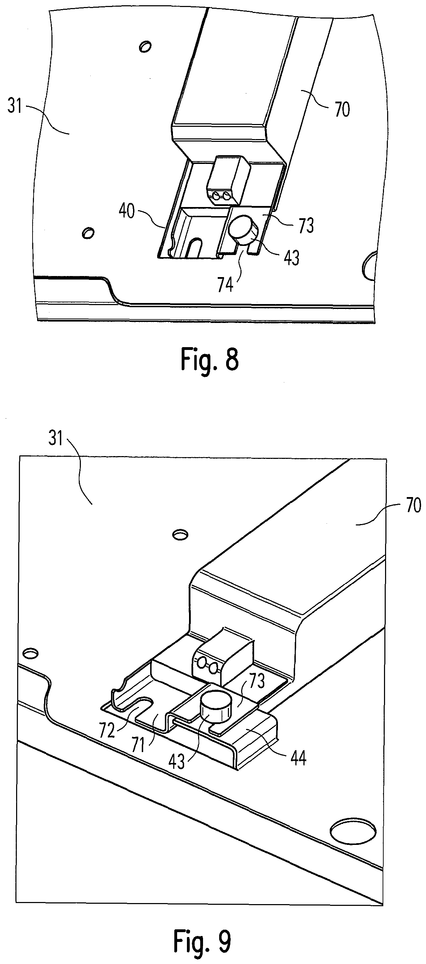

Der Geräteträger 30 selbst weist in seinem plattenförmigen Bereich 31 eine im Wesentlichen der Form des zu befestigenden Betriebsgeräts 70 entsprechende Ausnehmung 40 auf, welche lediglich in Eckbereichen, die den erhöhten Vorsprüngen 73 des Betriebsgeräts 70 entsprechen, Auflageflächen 41 mit zugehörigen Schrauböffnungen 42 aufweist. Wie in Figur 8 gezeigt ist, kann nunmehr das Betriebsgerät 70 in der zugehörigen Ausnehmung 40 des Geräteträgers 30 derart positioniert werden, dass die erhöhten Vorsprünge 73 auf den Auflageflächen 41 aufliegen. Über die entsprechende Ausnehmung 74 sowie die zugehörige Öffnung 42 kann dann ein Verschrauben des Betriebsgeräts 70 mit dem Geräteträger 30 erfolgen.

Der Vorteil der dargestellten Lösung besteht darin, dass zwar die Schraube 43 wiederum den plattenförmigen Bereich 31 des Geräteträgers 30 durchdringt und damit an der gegenüberliegenden Seite übersteht, allerdings die Schraube 43 nunmehr trotz allem nicht die Bodenfläche des Betriebsgeräts 70 überragt. Die im Vergleich zur Bodenfläche erhöhte Anordnung des Vorsprungs 73 hat nämlich zur Folge, dass das Betriebsgerät 70 in der Ausnehmung 40 des Geräteträgers 30 vertieft angeordnet ist und ebenfalls über die Unterseite des Geräteträgers 30 übersteht. Dieser Überstand entspricht vorzugsweise dem Überstand der Schraube 43. Damit muss zwar auch in diesem Fall der Geräteträger 30 einen gewissen Mindestabstand von der Abdeckung 25 aufweisen, da weder die Schraube 43 noch der Boden des Betriebsgeräts 70 mit der Abdeckung 25 kollidieren soll, auf Grund der vertieften Anordnung ragt das Betriebsgerät 70 andererseits an der Oberseite nunmehr nur noch mit einer geringen Höhe über die Oberfläche des Geräteträgers 30 hinaus. Die Gesamthöhe der resultierenden Anordnung bestehend aus Geräteträger 30, Betriebsgerät 70 und Schrauben 43 entspricht damit nur noch der Höhe des Betriebsgeräts 70 selbst, sodass im Vergleich zu bislang bekannten Lösungen eine Höhenreduzierung erzielt wird.

Selbstverständlich könnte bei der oben beschriebenen Variante auch auf die in den Figuren 6 bis 8 erkennbare abgestufte Ausführung der Vorsprünge mit den Schraublöchern 72 und 74 verzichtet werden und stattdessen vorgesehen sein, dass die Vorsprünge 71 und 73 grundsätzlich im Vergleich zur Bodenfläche des Betriebsgeräts 70 erhöht ausgeführt sind. Die dargestellte versetzte Anordnung eröffnet allerdings die Möglichkeit, das Betriebsgerät 70 - sofern gewünscht - auch in herkömmlicher Weise, also unmittelbar aufliegend auf einem Geräteträger zu befestigen.

Eine im Vergleich zu den Figuren 7 und 8 leicht veränderte Variante der Befestigung des Betriebsgeräts 70 an dem Geräteträger 30 ist in Figur 9 gezeigt. Hier liegt das Betriebsgerät 70 wiederum auf dem plattenförmigen Bereich 31 des Geräteträgers 30 im Wesentlichen vollflächig auf. Im Endbereich ist nunmehr allerdings beispielsweise durch eine entsprechende Ausprägung im Vergleich zum plattenförmigen Bereich 31 ein erhöhter Auflagebereich 44 ausgebildet, der wiederum mittels einer - nicht erkennbaren - Öffnung ein Verschrauben des Betriebsgeräts 70 mit dem Geräteträger 30 ermöglicht. Die erhöhte Auflagefläche 44 gewährleistet hierbei, dass die Schraube 43 nicht über die Unterseite des plattenförmigen Bereichs 31 des Geräteträgers 30 übersteht. Im Vergleich zu der Lösung der Figuren 7 und 8 ergibt sich hierbei eine der Dicke des Geräteträgers 31 entsprechende leicht größere Bauhöhe, allerdings ist nunmehr das Betriebsgerät 70 stabiler gelagert, da es - abgesehen von den Endbereichen - vollflächig auf dem Geräteträger 30 aufliegt.

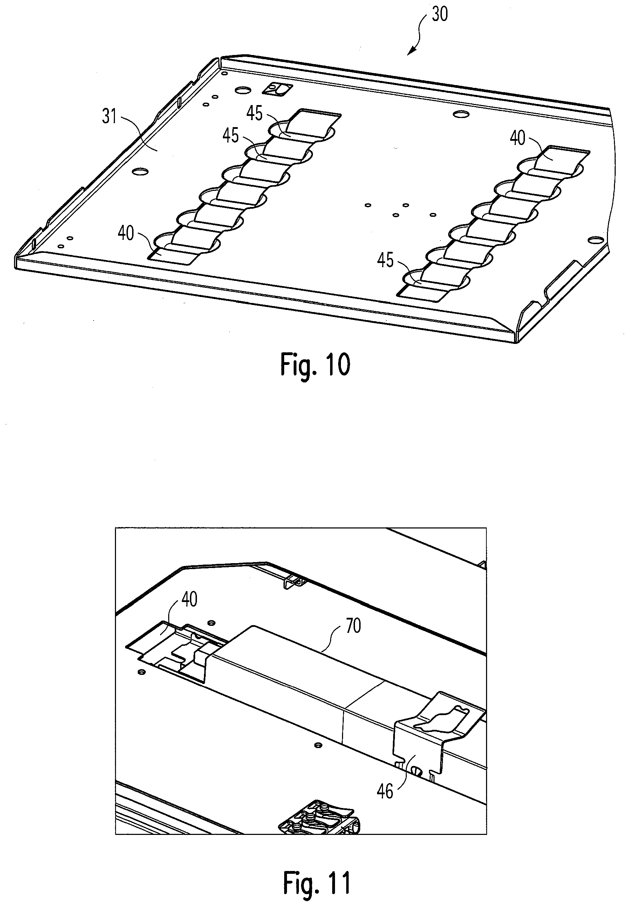

Die Figuren 10 und 11 zeigen ebenfalls alternative Möglichkeiten zur Lagerung eines Betriebsgeräts, wobei es sich im Wesentlichen um Weiterbildungen des in den Figuren 7 und 8 dargestellten Konzepts handelt. Auch bei dieser Variante erfolgt die Lagerung des Betriebsgeräts 70 in der Ebene des plattenförmigen Bereichs 31 des Geräteträgers 30, so dass also das Betriebsgerät 70 zu beiden Seiten übersteht. Die Weiterbildung besteht nunmehr allerdings darin, dass die Ausnehmungen 40 zur Aufnahme des Betriebsgeräts 70 nicht völlig geöffnet sind, sondern stattdessen durch Prägungen realisierte Auflagestege 45 gebildet werden, gegenüber der Fläche des plattenförmigen Bereichs 31 vertieft ausgeführt sind und auf denen das Betriebsgerät 70 aufliegen kann. Auch in diesem Fall wird eine etwas stabilere Lagerung des Betriebsgeräts 70 erreicht. Die Befestigung des Betriebsgeräts 70 an dem Geräteträger kann dann beispielsweise wie in Figur 11 gezeigt mit Hilfe einer Klemmfeder 46 erfolgen, welche U-förmig ausgebildet ist und das Betriebsgerät 70 übergreift. Mit entsprechenden Rastbereichen greift dann die Klemmfeder 46 in geeignete Öffnungen des Geräteträgers 30 und fixiert das Betriebsgerät 70 an diesem. Auf Grund der tiefer gelegten Positionierung des Betriebsgeräts 70 ist wiederum gewährleistet, dass das Verrasten der Feder 46 mit dem Geräteträger 30 nicht zu einer Erhöhung der Bauhöhe der Anordnung insgesamt führt.

Ein Vorteil dieser Lösung besteht darin, dass sämtliche beschriebenen Maßnahmen zur höhenoptimierten Lagerung des Betriebsgeräts 70 die Ausgestaltung des Geräteträgers 30 sowie gegebenenfalls der Klemmfeder 46 betreffen. Das Betriebsgerät 70 muss allerdings im Gegensatz zu den Lösungen der Figuren 6 bis 9 nicht modifiziert werden.

In gleicher Weise können die soeben beschriebenen Maßnahmen zur höhenoptimierten Lagerung eines Betriebsgeräts 70 auch auf weitere Komponenten, die an dem Geräteträger 30 angeordnet werden sollen, übertragen werden.

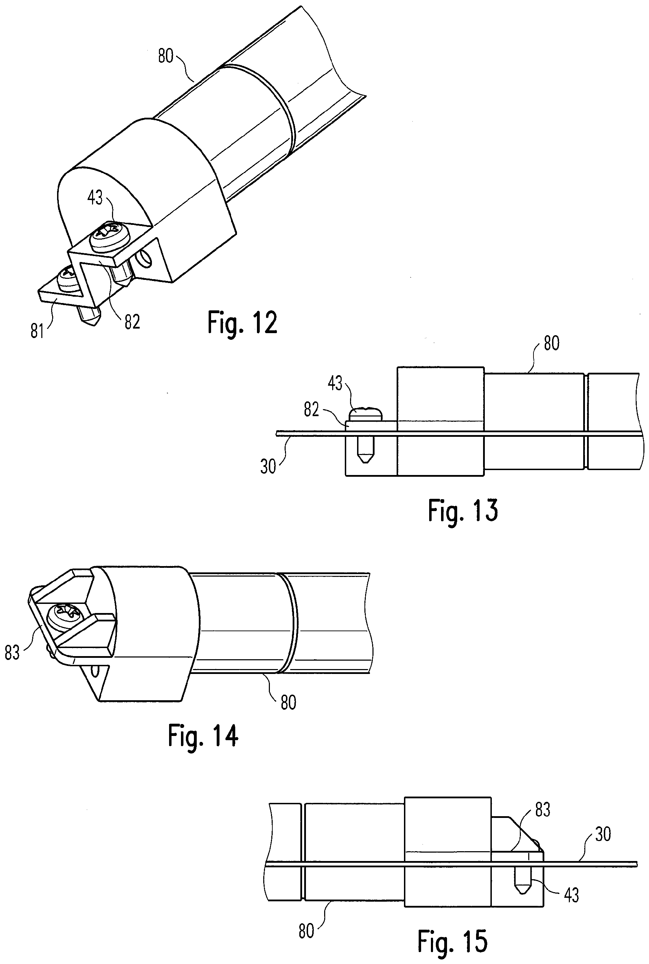

Die Figuren 12 und 13 zeigen hierbei zunächst ein erstes Beispiel eines Akkumulators 80, dessen Endbereiche ebenso wie das Betriebsgerät in den Figuren 6 bis 9 ausgestaltet sind. Das bedeutet, der Akkumulator 80 weist an seinen gegenüber liegenden Endbereichen zwei zueinander höhenversetzt ausgeführte Flächen 81 und 82 mit entsprechenden Schrauböffnungen auf, wobei dann ein Befestigen des Akkumulators 80 an dem Geräteträger 30 in analoger Weise wie in den Figuren 8 und 9 dargestellt erfolgt. Wesentlich ist wiederum, dass eine Fläche 82 im Vergleich zum Bodenbereich des Akkumulators 80 erhöht positioniert ist, sodass - wie in Figur 13 gezeigt - die mit dem Geräteträger 30 verschraubte Schraube 43 im montierten Zustand nicht über die Unterseite des Akkumulators 80 übersteht. Figur 13 zeigt sehr deutlich, dass die Gesamthöhe der Anordnung ausschließlich durch die Höhe des Akkumulators 80 festgelegt ist und keine weiteren zusätzlichen Höhen beziehungsweise Abmessungen zu berücksichtigen sind.

Die Figuren 14 und 15 zeigen eine alternative Variante des Akkumulators 80, bei der der Endbereich lediglich eine einzige Auflagefläche 83 mit einer entsprechenden Schrauböffnung aufweist, wobei die Auflagefläche 83 wiederum erhöht im Vergleich zur Bodenfläche des Akkumulators 80 ausgeführt ist. Auch in diesem Fall ergibt sich wie in Figur 15 erkennbar der Vorteil, dass die Schraube 43 im an dem Geräteträger 30 verschraubten Zustand nicht über die Unterseite des Akkumulators 80 übersteht. Selbstverständlich könnte in gleicher Weise wie in den Figuren 14 und 15 dargestellt, auch der Endbereich eines Lampenbetriebsgeräts 70 ausgeführt sein. Darüber hinaus könnte die Lagerung des Akkumulators selbstverständlich auch, wie in den Figuren 10 und 11 an Hand des Betriebsgeräts 70 erläutert, erfolgen.

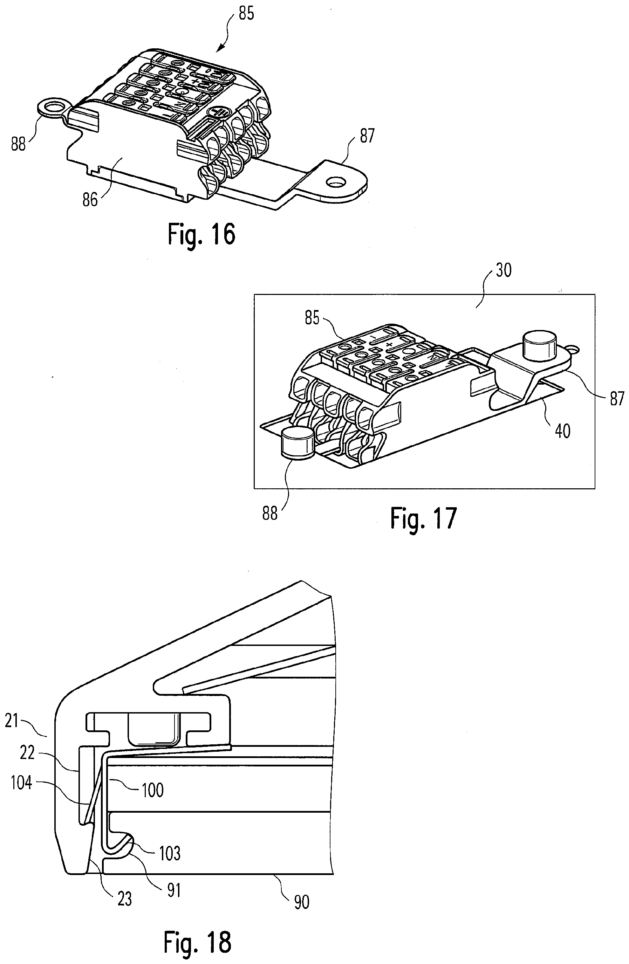

Die Figuren 16 und 17 schließlich zeigen eine Anschlussklemme 85, die ebenfalls in der Weise an dem Geräteträger 30 befestigt werden soll. Die Klemme 85 weist hierbei zu beiden Seiten des eigentlichen Klemmenkörpers 86 vorstehende Vorsprünge auf, die derart abgewinkelt ausgeführt sind, dass ihre Endbereiche im Vergleich zur Bodenfläche der Klemme 85 erhöht positioniert sind. Die Endbereiche 87 und 88 weisen dann wiederum entsprechende Öffnungen auf, die ein Verschrauben oder Verrasten der Klemme 85 mit dem Geräteträger 30 ermöglichen. Auch in diesem Fall weist der Geräteträger 30 - wie in Figur 17 gezeigt - eine entsprechende Ausnehmung auf, in der die Klemme 85 letztendlich leicht vertieft angeordnet ist.

Insgesamt tragen also die beschriebenen Maßnahmen dazu bei, dass die Befestigung der verschiedenen Komponenten an dem Geräteträger 30 nicht zu einer wesentlichen Erhöhung der Bauhöhe der Leuchte 1 insgesamt führt. Im Vergleich zu bislang bekannten Lösungen kann die Höhe sogar reduziert werden.

Ein weiterer Aspekt betrifft die Anordnung und Halterung einer transparenten Abdeckung innerhalb des Leuchtenrahmens 20, wobei über diese Abdeckung letztendlich das Licht der Leuchte 1 abgestrahlt wird. Im vorliegenden Fall ist eine sogenannte rahmenlose Halterung der Abdeckung vorgesehen. Das heißt, die Abdeckung liegt nicht auf einem Vorsprung des umlaufenden Rahmens 20 auf, sondern wird von diesem derart gehalten, dass sie bündig mit der Unterseite des Rahmens 30 positioniert ist, wobei ein geringfügiger Spalt zwischen Außenumfang der Abdeckung und dem Rahmen 20 verbleiben kann.

Zur Realisierung einer derartigen rahmenlosen Halterung war bislang bekannt, die Abdeckung mit einer umlaufenden Nut auszugestalten, in die ein federndes Element des Rahmens klemmend eingreift. Da der Rahmen in der Regel allerdings aus mehreren Teilen besteht, die zunächst zusammengefügt werden müssen, ist es üblicherweise erforderlich, in einem anschließenden Schritt den Rahmen zu beschichten, um Schweißstellen oder anderweitige Stoßstellen zu kaschieren. Da dies nicht mit bereits eingesetzter Abdeckung erfolgen kann, müssen die Nut der Abdeckung sowie die Feder des Rahmens derart gestaltet sein, dass auch noch im fertigen Zustand des Rahmens ein Verbinden mit der Abdeckung möglich ist. Dies wiederum führt dazu, dass die umlaufende Nut der Abdeckung verhältnismäßig groß dimensioniert werden muss, um evtl. Fertigungstoleranzen sowie Ausdehnungseffekte ausgleichen zu können. Eine vergrößerte Nut bedeutet allerdings wiederum das Erfordernis einer dickeren Abdeckung, was letztendlich zu einer größeren Bauhöhe der Leuchte führt.

In den Figuren 18 bis 20 ist eine erste Variante gezeigt, um dieses Problem zu lösen. Gezeigt sind hierbei das Rahmenprofil 21 im Schnitt sowie die von dem Rahmen 20 gehaltene Abdeckung 90. Die Abdeckung 90 kann beispielsweise Bestandteil einer mehrschichtigen Lichtleiter-Anordnung sein, die aus mehreren plattenförmigen Elementen besteht. Die Leuchtmittel werden dann am Umfang einer oberhalb der Abdeckung 90 ruhenden weiteren Lichtleiterplatte positioniert sein, in die das Licht der Leuchtmittel eingekoppelt und dann flächig verteilt wird. Diese Lichtleiterplatte sowie LEDs sind in Figur 18 nicht gezeigt, da hier in erster Linie die Halterung der Abdeckung 90 erläutert werden soll.

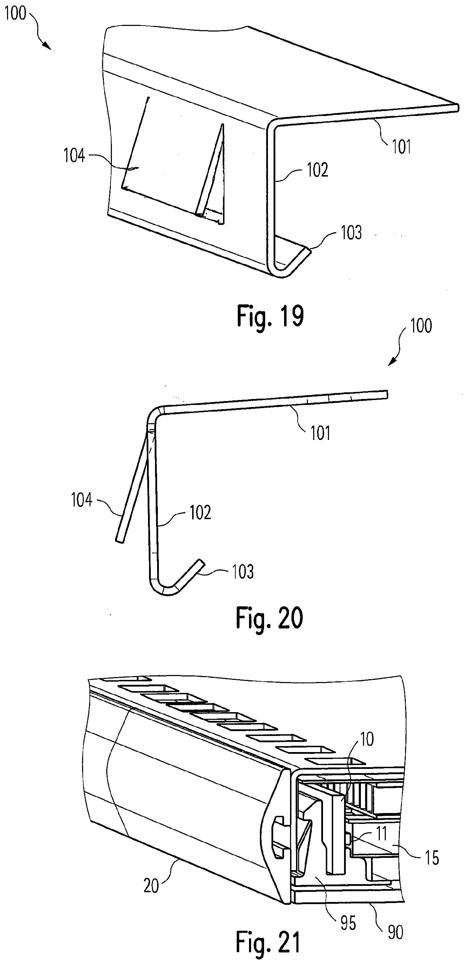

Erkennbar ist in Figur 18, dass die Abdeckung 90 wie üblich eine umlaufende Nut 91 aufweist, über welche eine Befestigung an dem Rahmen 20 erfolgt. Abweichend von bislang bekannten Lösungen greift allerdings nicht ein Federelement des Rahmenprofilteils 21 selbst in die Nut 91 ein, sondern es ist stattdessen vorgesehen, dass das Verklemmen von Rahmen 20 und Abdeckung 90 mit Hilfe separater Federelemente 100 erfolgt. Diese Federelemente 100 sind in Perspektive sowie im Schnitt in den Figuren 19 und 20 gezeigt und bestehen jeweils aus einem entsprechend gestanzten und geformten Blechteil. Wie den Darstellungen entnommen werden kann, ist das Federelement 100 hierbei abgewinkelt ausgeführt mit zwei Hauptschenkeln 101 und 102, wobei der vertikal ausgerichtete Schenkel 102 an seinem unteren Ende für den klemmenden Eingriff in die Nut 91 der Abdeckung 90 vorgesehen ist und hierzu eine Umbiegung 103 aufweist. Weiterhin sind in dem vertikalen Schenkel 102 einzelne Federbereiche 104 ausgestanzt und nach außen gebogen. Diese sind für einen Eingriff in eine nach innen weisende, umlaufende weitere Nut 22 des Rahmenprofilteils 21 vorgesehen.

Der horizontale Schenkel 101 wiederum übergreift die auf der Abdeckung 90 ruhenden Elemente, also insbesondere die Lichtleiteranordnung sowie eine gegebenenfalls an der Rückseite hiervon angeordnete Abdeckung und ermöglicht weiterhin, dass die Federelemente 100 zunächst seitlich auf die Abdeckung 90 sowie die darauf ruhenden Elemente aufgeschnappt werden können. In diesem Zustand kann dann der Rahmen 20 mit der Abdeckung 90 beziehungsweise den Federelementen 100 verklemmt werden, was dadurch erfolgt, dass die Abdeckung 90 von der Unterseite her in den Rahmen 20 eingesetzt wird. Die Federbereiche 104 gleiten hierbei an einer entsprechenden Innenkante 23 der Rahmenprofilteile 21 entlang, bis sie in die Nut 22 einschnappen können. Auf diesem Wege wird ein verhältnismäßig einfaches Verbinden zwischen Rahmen 20 und Abdeckung 90 ermöglicht, wobei nunmehr die Federn 100 Dehnungsunterschiede und Fertigungstoleranzen ausgleichen können. Dies wiederum bedeutet, dass die Nut 91 und damit die Abdeckung 90 insgesamt kleiner beziehungsweise flacher gestaltet werden kann und wiederum eine Reduzierung der Bauhöhe der Leuchte 1 insgesamt erzielt wird.

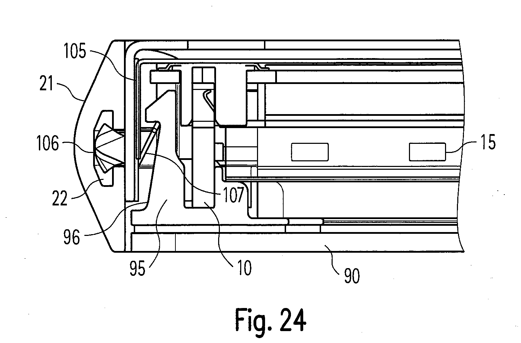

Die Figuren 21 bis 24 zeigen eine zweite Variante einer Verbindung von Rahmen 20 und Abdeckung 90, wobei nunmehr die Abdeckung 90 nicht unmittelbar die zum Verklemmen erforderliche, umlaufende Nut aufweist, sondern diese stattdessen an einem Halteelement 95 ausgebildet ist, welches im Randbereich an der Abdeckung 90 befestigt, beispielsweise an der der Lichtabstrahlseite gegenüberliegenden Rückseite mit dieser verklebt ist. Das Halteelement 95 dient darüber hinaus auch der Lagerung der LED-Platinen 10 mit den zugehörigen LEDs 11. Weiterhin wird durch das Halteelement 95 insbesondere auch der plattenförmige Lichtleiter 15 gehalten, in den das LED-Licht seitlich eingekoppelt wird. Im vorliegenden Fall kommt eine mehrlagige Lichtleiter-Anordnung zum Einsatz, welche zusätzliche plattenförmige Elemente oder Folien enthält, die für eine bessere Durchmischung und Verteilung des Lichts sorgen. Es wäre allerdings ebenso denkbar, dass eine einzelne Lichtleiter-Platte zum Einsatz kommt. Wesentlich ist, dass die Abdeckung 90 von dem Halteelement 95 sowie darüber hinaus auch die LED-Patinen 10 und die Lichtleiter-Platte 15 gehalten werden. Diese Einheit bestehend aus Abdeckung 90, Halteelement 95 sowie den davon gehaltenen weiteren Komponenten der Leuchte soll dann wiederum rahmenlos von dem Rahmen 20 gehalten werden, wobei wiederum separate Federelemente 105 vorgesehen sind, die für die klemmende Verbindung verantwortlich sind.

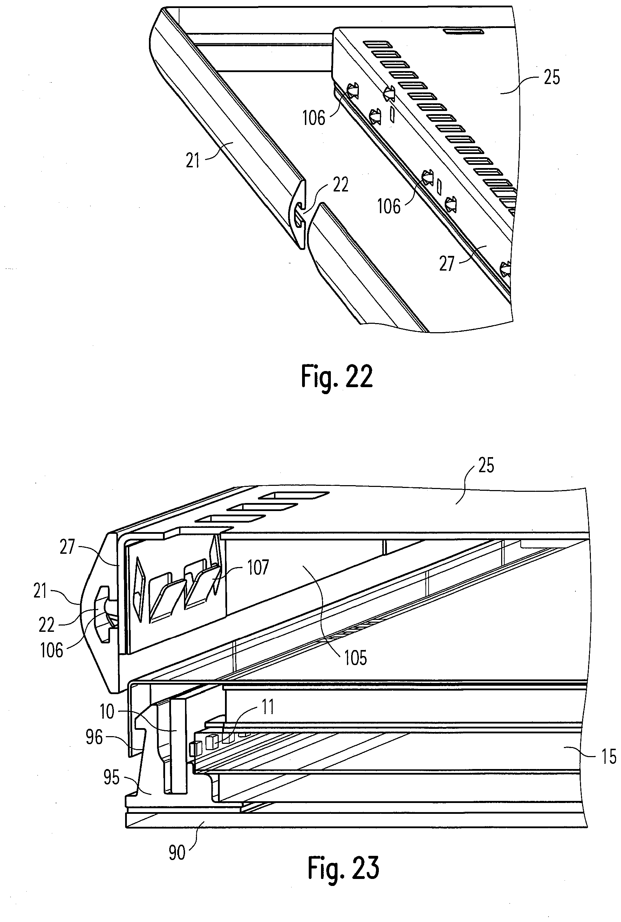

Diese Federelemente 105, die insbesondere in Figur 23 erkennbar sind, werden wiederum durch entsprechend gestanzte und geformte Blechteile gebildet, wobei sie im vorliegenden Fall zusätzlich auch der Halterung der rückseitigen Abdeckung 25 dienen. Hierzu werden die Federelemente 105 zunächst an einem umlaufenden, nach unten gerichteten Steg 27 der Abdeckung 25 an dessen Innenseite positioniert. Mit entsprechenden Vorsprüngen 106, die wiederum durch Prägungen gebildet sein können, durchgreifen die Federelemente 105 dann entsprechende Öffnungen in dem vertikalen Steg 27 der Abdeckung 25. Gleichzeitig greifen diese Vorsprünge 106 in die umlaufende Nut 22 der Rahmenprofilteile 21 ein, sodass zunächst mit Hilfe der Federelemente 105 eine Verbindung zwischen Rahmen 20 und Abdeckung 25 erzielt wird. Beispielsweise wäre es denkbar, die hierbei entstehende Baueinheit bestehend aus Rahmen 20 und Abdeckung 25 in einem darauf folgenden Schritt zu beschichten beziehungsweise zu lackieren. Denkbar wäre allerdings auch, dass mit Hilfe der Federelemente 105 der fertige Rahmen mit der Abdeckung 25 verbunden wird.

Im abschließenden Montageschritt wird dann die Einheit bestehend aus Abdeckung 90, Halteelement 95 und den davon gehaltenen weiteren Komponenten in den Rahmen 20 eingesetzt und mit Hilfe der Federelemente 105 fixiert. Wiederum erfolgt dies dadurch, dass die Federelemente 105 zusätzlich ausgestanzte Federbereiche 107 aufweisen, die nunmehr nach innen ragen und für einen klemmenden Eingriff in die nach außen gerichtete Nut 96 der Halteelemente 95 ausgeführt sind. Die Federbereiche 107 gleiten hierbei von oben her an der Oberkante der Halteelemente 95 entlang, bis sie in die Nut 96 einschnappen, wobei in diesem Zustand dann eine klemmende Halterung von Rahmen 20 und Abdeckung 90 erzielt wird. Auch in diesem Fall führen die separaten Federelemente 105 zu dem Vorteil, dass diese in entsprechender Weise gestaltet sein können, um Fertigungstoleranzen und temperaturbedingte Ausdehnungen ausgleichen zu können.

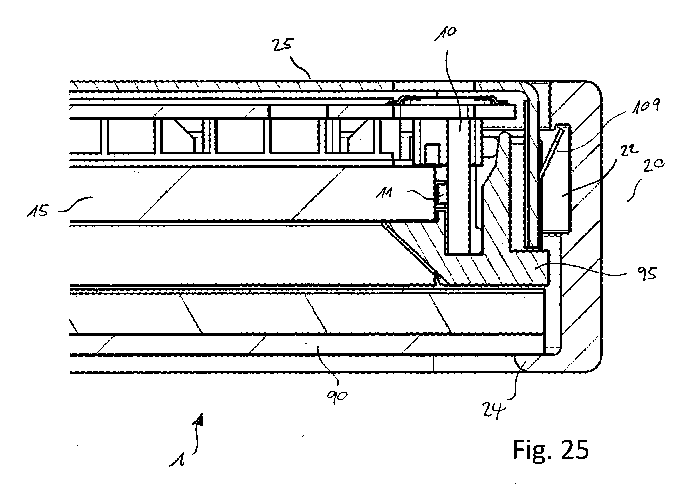

Eine dritte Lösung zur Halterung des Leuchtenrahmens 20 ist in den Figuren 25 bis 29 dargestellt. Hinsichtlich ihres grundsätzlichen Aufbaus entspricht hierbei die Leuchte 1 den in den vorherigen Figuren dargestellten Varianten der erfindungsgemäßen Flächenleuchte, weshalb vergleichbare Elemente mit vergleichbaren Bezugszeichen dargestellt sind.

Dabei besteht insbesondere eine Übereinstimmung hinsichtlich der für die Lichterzeugung und Lichtabgabe verantwortlichen Komponenten. Wiederum kommt also eine Lichtleiter-Platte 15 zum Einsatz, an deren Randbereichen LED-Platinen 10 angeordnet sind, wobei mit Hilfe von Halteelementen 95 einerseits die LED-Platinen 10 mit den zugehörigen LEDS 11, als auch die Lichtleiterplatte 15 gehalten werden. Die Halteelemente 95 dienen darüber hinaus auch der Halterung der Leuchtenabdeckung 90 und es ist wiederum ein mehrschichtiger Aufbau plattenförmiger Elemente vorgesehen, über die die Lichtverteilung und Lichtabgabe in der gewünschten Weise erzielt wird. Somit wird wiederum eine Baueinheit geschaffen, die vormontierbar ist und dann als Gesamtes beim Zusammenfügen der Leuchte 1 genutzt werden kann.

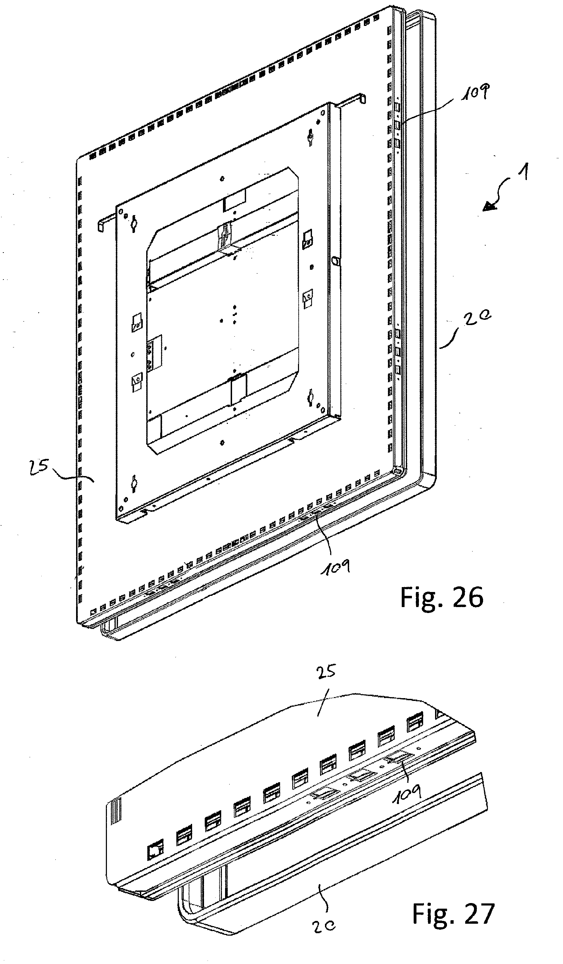

Der Unterschied im Vergleich zu dem vorherigen Ausführungsbeispiel besteht nunmehr darin, dass die für die Lichterzeugung und Lichtabgabe verantwortlichen Komponenten zunächst an der rückseitigen Abdeckung 25 befestigt werden und dann der Rahmen 20 als eigenständige geschlossene Baueinheit an diese Einheit angesetzt und dort befestigt werden kann. Entsprechend der vergrößerten Darstellung von Figur 27 sind hierbei am Außenumfang - beispielsweise der Abdeckung 25 -nach außen weisende Federn 109 vorgesehen, die hier in Form von ausgestanzten Zungen vorliegen. Hierbei sind insbesondere entsprechend der Darstellungen gemäß Figur 26 an jeder Längsseite der Leuchte 1 sechs entsprechende Federn 109 ausgebildet, wobei jeweils zwei Dreier-Gruppen vorliegen. Selbstverständlich könnte allerdings die entsprechende Anzahl der Federn 109 sowie deren Positionierung auch entsprechend angepasst werden.

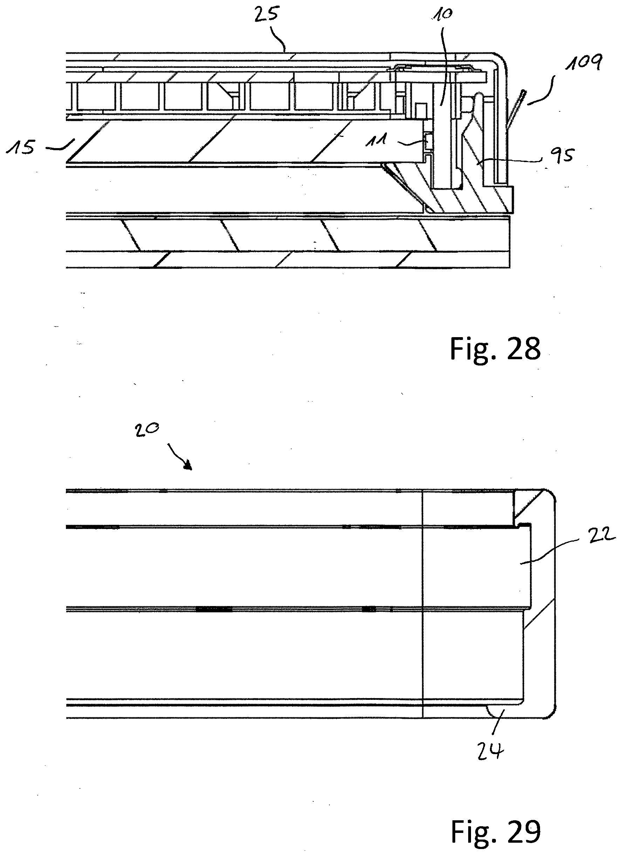

Der Rahmen 20 selbst weist wiederum entsprechend der Schnittdarstellung von Figur 29 eine am Innenumfang verlaufende Nut 22 auf, in welche die Federn 109 einrasten sollen, wie dies anhand der Schnittdarstellung von Figur 25 erkennbar ist. Ferner weist der Rahmen 20 an seiner Unterseite einen leicht nach innen ragenden Steg 24 auf, der im verrasteten Zustand mit der restlichen Leuchte 1 dann an der Unterseite der Abdeckung 90 anliegt und diese somit zusätzlich fixiert. Ggf. könnte auf diesen Steg 24 auf verzichtet werden, um wiederum eine klassische "rahmenlose" Gestaltung der Leuchte 1 zu erzielen.

Beim Zusammenbau der Leuchte 1 werden also die einzelnen Komponenten zunächst derart zusammengefügt, dass sich die in Figur 28 erkennbare Baueinheit ergibt. Hier sind bereits die für die Lichterzeugung und Lichtabgabe verantwortlichen Komponenten an der rückseitigen Abdeckung 25 befestigt. In einem folgenden, in den Figuren 26 und 27 angedeuteten Montageschritt wird dann der Rahmen 20 von der Unterseite her an diese Baueinheit angesetzt und nach oben verschoben, bis die Federn 109 in die umlaufende Nut 22 einrasten.

Bei dieser Variante stellt somit also nochmals sehr deutlich der Rahmen im Vergleich zu bislang bekannten Lösungen eine eigenständige Baueinheit dar, die im Ganzen an der Leuchte befestigt wird. Im Vergleich zu bislang bekannten Lösungen wird also der Leuchtenrahmen nicht durch die Befestigung einzelner Rahmenteile an der Leuchte gebildet, sondern er kann als geschlossene Baueinheit an der Leuchte befestigt werden, was hinsichtlich der Gestaltungsmöglichkeiten für den Rahmen deutliche Vorteile mit sich bringt. Insbesondere kann dieser vor der abschließenden Befestigung an der Leuchte geformt und entsprechend lackiert oder beschichtet werden, so dass keinerlei Stoßstellen oder vergleichbare Lücken oder Spalten mehr erkennbar sind. Dies gilt sowohl für die dargestellte quadratische Leuchtenform als auch für beliebige andere Flächenformen. Abgesehen davon, dass der Zusammenbau der Leuchte hierdurch vereinfacht wird, kann das Erscheinungsbild der Leuchte selbst nochmals deutlich verbessert werden.

Letztendlich werden also durch die verschiedenen beschriebenen Maßnahmen Möglichkeiten zur Verfügung gestellt, die Bauhöhe einer Flächenleuchte insgesamt zu reduzieren. Weiterhin sind eine einfache Montage sowie eine effiziente Möglichkeit, die Leuchtmittel mit einem Betriebsgerät zu verbinden, gegeben.

## Patentansprüche

1. Flächenleuchte (1) mit einem plattenförmigen Lichtleiterelement (15) sowie an zumindest einer Schmalseite des Lichtleiterelements (15) angeordneten Leuchtmitteln (10), deren Licht über eine durch die Schmalseite gebildete Lichteintrittsfläche in das Lichtleiterelement (15) eingekoppelt und über eine im Wesentlichen senkrecht zur Lichteintrittsfläche ausgerichtete Lichtaustrittsfläche abgegeben wird,
wobei an der der Lichtaustrittsfläche gegenüberliegenden Seite des Lichtleiterelements (15) ein flächiger Geräteträger (30) vorgesehen ist, an dem zumindest ein Betriebsgerät (70) für die Leuchtmittel (10) angeordnet ist,
wobei die Leuchte (1) ferner einen Montagerahmen (50) aufweist, der lösbar mit dem Geräteträger (30) verbindbar und zur Befestigung an einer Trägerfläche, beispielsweise an der Decke eines zu beleuchtenden Raumes ausgebildet ist,
wobei die lösbare Verbindung zwischen Geräteträger (30) und Montagerahmen (50) zwei Riegel (60) aufweist, die an dem Montagerahmen (50) verschiebbar angeordnet und zum Verrasten mit zumindest jeweils einem an dem Geräteträger (30) angeordneten Rastelement (39) ausgebildet sind, wobei die Riegel (60) zum Lösen der Verrastung in einer Richtung parallel zur Ebene des Lichtleiterelements (15) bewegbar sind,
und wobei der Montagerahmen (50) einen rahmenartigen Bereich (51) aufweist, an dessen Seiten sich Stege (53, 54) nach unten erstrecken, wobei zwei dieser Stege (53) einander gegenüber liegende Führungen für die Riegel (60) bilden und die Riegel (60) jeweils an der Innenseite der Stege (53) anliegen.

2. Flächenleuchte nach Anspruch 1,
**dadurch gekennzeichnet,**
**dass** die beiden Riegel (60) mit ihren Endbereichen jeweils über den Montagerahmen (50) und den Geräteträger (30) überstehen.

3. Flächenleuchte nach einem der vorherigen Ansprüche,
**dadurch gekennzeichnet,**
**dass** die Riegel (60) in eine Rastposition vorgespannt gelagert sind.

4. Flächenleuchte nach einem der vorherigen Ansprüche,
**dadurch gekennzeichnet,**
**dass** jeder Riegel (60) eine horizontale Auflagefläche (63) für das zugehörige Rastelement (39) aufweist.

## Claims

1. A surface area luminaire (1) with a plate-shaped light guiding element (15) and lighting means (10) arranged on at least one narrow side of the light guiding element (15), the light of which is coupled into the light guiding element (15) via a light entry surface formed by the narrow side and is emitted via a light exit surface oriented substantially perpendicular to the light entry surface,
wherein on the side of the light guiding element (15) opposite the light exit surface a flat device carrier (30) is provided, on which at least one operating device (70) for the lighting means (10) is arranged,
wherein the luminaire (1) also has a mounting frame (50), which can be detachably connected to the device carrier (30) and is designed for fastening to a carrier surface, for example, to the ceiling of a room to be illuminated,
wherein the detachable connection between device carrier (30) and mounting frame (50) has two bolts (60), which are displaceably arranged on the mounting frame (50) and are designed for latching with at least one latching element (39) arranged on the device carrier (30), wherein the bolts (60) for releasing the latching are movable in a direction parallel to the plane of the light guiding element (15),
and wherein the mounting frame (50) has a frame-like region (51), on the sides of which webs (53, 54) extend downward, wherein two of said webs (53) form guides opposite one another for the bolts (60) and the bolts (60) in each case abut against the inside of the webs (53).

2. The surface area luminaire according to Claim 1,
**characterized in**
**that** the two bolts (60) with their end regions in each case project beyond the mounting frame (50) and the device carrier (30).

3. The surface area luminaire according to any one of the preceding claims,
**characterized in**
**that** the bolts (60) are mounted in a pre-tensioned manner into a latching position.

4. The surface area luminaire according to any one of the preceding claims,
**characterized in**
**that** each bolt (60) has a horizontal bearing surface (63) for the associated latching element (39).

## Revendications

1. Panneau lumineux (1) avec un élément de guidage de lumière (15) en forme de plaque, ainsi que des moyens d'éclairage (10) disposés au moins sur un côté étroit de l'élément de guidage de lumière (15), dont la lumière est introduite par l'intermédiaire d'une surface d'entrée de lumière formée par le côté étroit, dans l'élément de guidage de lumière (15) et est émise par l'intermédiaire d'une surface de sortie de lumière orientée globalement perpendiculairement par rapport à la surface d'entrée de lumière,
dans lequel, sur le côté de l'élément de guidage de lumière (15) opposé à la surface de sortie de lumière, est prévu un support d'appareil plat (30) sur lequel est disposé au moins un appareil de commande (70) pour les moyens d'éclairage (10),
dans lequel le panneau lumineux (1) comprend en outre un cadre de montage (50) qui peut être relié de manière amovible avec le support d'appareil (30) et qui est conçu pour la fixation à une surface de support, par exemple sur le plafond d'une pièce à éclairer,
dans lequel la liaison amovible entre le support d'appareil (30) et le cadre de montage (50) comprend deux verrous (60) qui sont disposés de manière coulissante sur le cadre de montage (50) et qui sont conçus pour un encliquetage respectivement avec au moins un élément d'encliquetage (39) disposé sur le support d'appareil (30), dans lequel les verrous (60) peuvent être déplacés, pour le détachement de l'encliquetage, dans une direction parallèle au plan de l'élément de guidage de lumière (15),
et dans lequel le cadre de montage (50) comprend une partie en forme de cadre (51) sur les côtés de laquelle des nervures (53, 54) s'étendent vers le bas, dans lequel ces deux nervures (53) forment des guidages opposés pour les verrous (60) et les verrous (60) s'appuient respectivement contre le côté interne des nervures (53).

2. Panneau lumineux selon la revendication 1,
**caractérisé en ce que**
les deux verrous (60) dépassent, avec leurs parties d'extrémité, respectivement du cadre de montage (50) et du support d'appareil (30).

3. Panneau lumineux selon l'une des revendications précédentes,
**caractérisé en ce que**
les verrous (60) sont montés de manière précontrainte dans une position d'encliquetage.

4. Panneau lumineux selon l'une des revendications précédentes,
**caractérisé en ce que**
chaque verrou (60) comprend une surface d'appui horizontale (63) pour l'élément d'encliquetage (39) correspondant.
